# EUROPÄISCHE PATENTSCHRIFT

(11) **EP 2 075 046 B1**
(45) Veröffentlichungstag und Bekanntmachung des Hinweises auf die Patenterteilung: **28.11.2012**
(21) Anmeldenummer: 08171269.7
(22) Anmeldetag: 11.12.2008
(51) Int. Cl.: B01D 29/11, B01D 29/82, B01D 29/94, B01D 45/18

(54) **Separationseinrichtung**
Separation device
Dispositif de séparation

(30) Priorität: 31.12.2007 DE 102007063240
(43) Veröffentlichungstag der Anmeldung: 01.07.2009
(73) Patentinhaber: Mahle International GmbH, 70376 Stuttgart (DE)
(72) Erfinder: Geisbauer, Heinz, 74629, Pfedelbach (DE)
(74) Vertreter: BRP Renaud & Partner

(56) Entgegenhaltungen:
- DE-A1- 4 345 018
- DATABASE WPI Week 199627 Thomson Scientific, London, GB; AN 1996-117949 XP002521494 & NL 1 000 135 C2 (SANOVO ENG AS) 19. März 1996 (1996-03-19)
- DATABASE WPI Week 200136 Thomson Scientific, London, GB; AN 2001-341696 XP002521495 & NL 1 013 113 C2 (COENRAADTS MASCHFAB BV) 23. März 2001 (2001-03-23)

## Beschreibung

Die vorliegende Erfindung betrifft eine Separationseinrichtung zum Entfernen von Feststoffen aus einer Flüssigkeit mit den Merkmalen des Oberbegriffs des Anspruchs 1.

Bei einer Vielzahl von technischen Anwendungen ist es erforderlich, aus einer Flüssigkeit Feststoffe zu entfernen. Beispielsweise müssen bei einem Kühl-Schmierstoff-Kreislauf einer metallbearbeitenden Anlage Späne oder andere Bearbeitungsabfälle, die in den Kühl-Schmierstoff gelangen, aus dem Kühl-Schmierstoff wieder entfernt werden, um die Funktionsweise des Kühl-Schmierstoff-Kreises gewährleisten zu können. Ferner ist es auch bei Flüssigkeiten mit hohem Feststoffgehalt, wie z.B. bei Pasten, im Rahmen ihrer Herstellung erforderlich, Feststoffe mit unzulässig hoher Korngröße aus der Flüssigkeit zu entfernen. Gleiches gilt auch für die Herstellung von Lebensmitteln. Beispielsweise wird bei der Herstellung von Schokolade versucht, Verunreinigungen aus der flüssigen Schokolodenmasse zu entfernen.

Bei derartigen Anwendungen können Separationseinrichtungen der eingangs genannten Art zum Einsatz kommen. Eine solche Separationseinrichtung weist üblicherweise ein Gehäuse auf, das mit einem Zulauf und mit einem Ablauf versehen ist und das einen mit dem Zulauf und mit dem Ablauf kommunizierenden Innenraum enthält. Die Separationseinrichtung kann beispielsweise mittels Sedimentation arbeiten. Zusätzlich oder alternativ kann eine derartige Separationseinrichtung auch mit Filtration arbeiten, wobei sie dann auch als Filtereinrichtung bezeichnet werden kann.

Aus der NL 1 000 135 C2 ist beispielsweise eine Separationseinrichtung zum Entfernen von Feststoffen aus einer Flüssigkeit bekannt, die ein Gehäuse aufweist, das einen Zulauf und einen Ablauf sowie einen mit dem Zulauf und mit dem Ablauf kommunizierenden zylindrischen Innenraum besitzt. Ferner sind ein zum Innenraum hin offener Sammelraum zum Sammeln separierter Feststoffe und ein im Innenraum koaxial zum Sammelraum hubverstellbaren Kolben vorgesehen. Dabei ist der der Kolben so ausgestaltet, dass er zum Komprimieren der gesammelten Feststoffe in den als Kompressionsraum ausgestalteten Sammelraum einfährt und dabei Flüssigkeit zum Innenraum hin verdrängt

Problematisch bei Separationseinrichtungen ist der Umstand, dass die im Gehäuse separierten Feststoffe von Zeit zu Zeit ausgetragen werden müssen, um die Separationswirkung nicht zu gefährden. Hierzu kann es erforderlich sein, den Separationsprozess zu unterbrechen, um die Flüssigkeit abzulassen und die verbleibenden Feststoffe entfernen zu können. Dies ist vergleichsweise zeitaufwändig. Grundsätzlich können die Feststoffe auch bei laufendem Betrieb aus dem Gehäuse entfernt werden, wobei jedoch in der Regel vergleichsweise viel Flüssigkeit verloren geht.

Die vorliegende Erfindung beschäftigt sich mit dem Problem, für eine Separationseinrichtung der eingangs genannten Art eine verbesserte Ausführungsform anzugeben, die sich insbesondere dadurch auszeichnet, dass sie einen Feststoffaustrag mit geringem Flüssigkeitsverlust ermöglicht. Des weiteren soll die Separationseinrichtung mit möglichst wenig Unterbrechungen für den Feststoffaustrag arbeiten können.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen zum Innenraum hin offenen Sammelraum sowie einen im Gehäuse koaxial zum Sammelraum hubverstellbaren Kolben vorzusehen. Durch Hubverstellungen des Kolbens kann das Ansammeln abgeschiedener Feststoffe im Sammelraum unterstützt werden. Beispielsweise kann der Kolben mit einer relativ niedrigen Hubgeschwindigkeit in Richtung zum Sammelraum verstellt werden, wobei er axial beabstandet zum Sammelraum einen Totpunkt seiner Kolbenbewegung aufweist. Das Zurückstellen des Kolbens, bei dem er sich vom Sammelraum entfernt, kann dann mit einer erhöhten Geschwindigkeit erfolgen, wodurch im Innenraum eine Strömung erzeugt wird, die in Richtung zum Sammelraum orientiert ist. Die darin mitgeführten Feststoffe werden durch diese Strömung ebenfalls in Richtung zum Sammelraum hin beschleunigt, wodurch das Sammeln der Feststoffe im Sammelraum begünstigt wird.

Die Erfindung beruht außerdem auf dem allgemeinen Gedanken, die Separationseinrichtung mit einer Kompressionseinrichtung zum Verdichten der separierten Feststoffe in dem als Kompressionsraum dienenden Sammelraum auszustatten. Die komprimierten Feststoffe können als nahezu trockener Block oder Brikett aus dem Gehäuse ausgetragen werden. Der jeweilige Feststoffblock selbst enthält nur noch wenig Flüssigkeit. Gleichzeitig ermöglicht der verdichtete Feststoffblock einen einfachen Austrag aus dem Gehäuse, der vergleichsweise rasch realisierbar ist, so dass die Unterbrechung des Separationsbetrieb zeitlich kurz ausfällt. Gleichzeitig ermöglicht der kompakte Feststoffblock ein vergleichsweise dichtes Austragen, also ohne großen zusätzlichen Flüssigkeitsverlust.

Erreicht wird dies dadurch, dass die Kompressionseinrichtung einen zum Innenraum des Gehäuses hin offenen Kompressionsraum aufweist, in dem sich die separierten Feststoffe sammeln können. Ferner umfasst die Kompressionseinrichtung einen im Innenraum hubverstellbaren Kolben, der zum Komprimieren der im Kompressionsraum gesammelten Feststoffe in den Kompressionsraum einfährt und dabei Flüssigkeit zum Innenraum hin verdrängt. Mit Hilfe eines derartigen Kolbens lassen sich vergleichsweise hohe Drücke erzeugen, um die Feststoffe im Kompressionsraum zu verdichten und dabei durch die Verdrängung der Flüssigkeit mehr oder weniger zu trocknen. Durch die Kompression mittels eines Kolbens in einem als Zylinder dienenden Kompressionsraum lassen sich vergleichsweise trockene, hoch verdichtete, komprimierte Feststoffkörper erzeugen mit den zuvor genannten Eigenschaften, wonach sie einfach und ohne großen Flüssigkeitsverlust aus dem Gehäuse entfernbar sind.

Erfindungsgemäß ist ferner vorgesehen, dass der Zulauf so am Gehäuse angeordnet ist, dass die Flüssigkeit tangential in den Innenraum eintritt, und dass im Gehäuse ein zum Sammelraum hin offenes zylindrisches Tauchrohr koaxial zum Innenraum angeordnet ist, derart, dass sich radial zwischen dem Gehäuse und dem Tauchrohr ein zum Sammelraum hin offener Ringraum ausbildet. Die Kombination aus tangentialem Zustrom und Tauchrohr führt zusätzlich zu einer Trägheitsabscheidung für Grobschmutz, was die Effektivität der Separationseinrichtung verbessert.

Besonders vorteilhaft ist eine Ausführungsform, bei welcher an einer vom Innenraum abgewandten Auslassseite des Kompressionsraums eine Auslass-Sperreinrichtung angeordnet ist, die so ausgestaltet ist, dass sie zum Komprimieren der Feststoffe die Auslassseite verschließt und zum Austragen der komprimierten Feststoffe, also des jeweiligen Feststoffblocks, die Auslassseite öffnet. Der im Kompressionsraum erzeugte Feststoffblock kann somit an der vom Innenraum des Gehäuses abgewandten Auslassseite aus dem Kompressionsraum und somit aus dem Gehäuse entfernt werden. Dies ist in mehrfacher Hinsicht vorteilhaft. Zum einen enthält der Bereich, durch den der Feststoffblock aus dem Gehäuse entfernt wird, kaum Flüssigkeit, da er durch den Feststoffblock ausgefüllt ist. Der Feststoffblock wirkt hier wie ein Stopfen und kann insbesondere eine hinreichende Dichtigkeit gegenüber dem übrigen Innenraum des Gehäuses bewirken. Zum anderen lässt sich der komprimierte Feststoffblock durch diese Gehäuseöffnung besonders einfach entnehmen, wobei seine Dichtungswirkung oder Stopfenwirkung einen unerwünschten Flüssigkeitsaustrag verhindert.

Besonders vorteilhaft ist hierbei eine Weiterbildung, bei welcher der Kolben so ausgestaltet ist, dass er so angesteuert werden kann, dass er die komprimierten Feststoffe aus der geöffneten Auslassseite austreiben kann. Mit anderen Worten, die Hublänge des Kolbens ist einstellbar und zwar so, dass der Kolben zum einen bei verschlossenem Auslass die sich im Kompressionsraum sammelnden Feststoffe komprimieren kann und dass er zum anderen bei geöffnetem Auslass die im Kompressionsraum komprimierten Feststoff austragen kann. Hierzu kann der Kolben beispielsweise einen bis zur Auslassseite reichenden Maximalhub aufweisen und druckgesteuert sein, so dass er immer bei Erreichen eines voreingestellten Kompressionsdrucks anhält und seine Hubrichtung umkehrt. Bei geöffneter Auslassseite ist dann der Kolbendruck groß genug, um den Feststoffblock aus dem Kompressionsraum auszutreiben.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch eine Separationseinrichtung mit zwei Varianten,
- Fig. 2 bis 6: jeweils einen Längsschnitt durch die Separationseinrichtung im Bereich eines Kolbens, bei unterschiedlichen Ausführungsformen,
- Fig. 7 bis 10: Längsschnitte der Separationseinrichtung wie in Fig. 1, jedoch bei unterschiedlichen Ausführungsformen,
- Fig. 11: einen Querschnitt der zu den Fig. 9 und 10 gezeigten Separationseinrichtung entsprechend Schnittlinien VI,
- Fig. 12: ein Detail VII der Separationseinrichtungen der Fig. 9 und 10 bei einer anderen Ausführungsform,
- Fig. 13: einen Längsschnitt der Separationseinrichtung wie in Fig. 1, jedoch bei einer weiteren Ausführungsform.

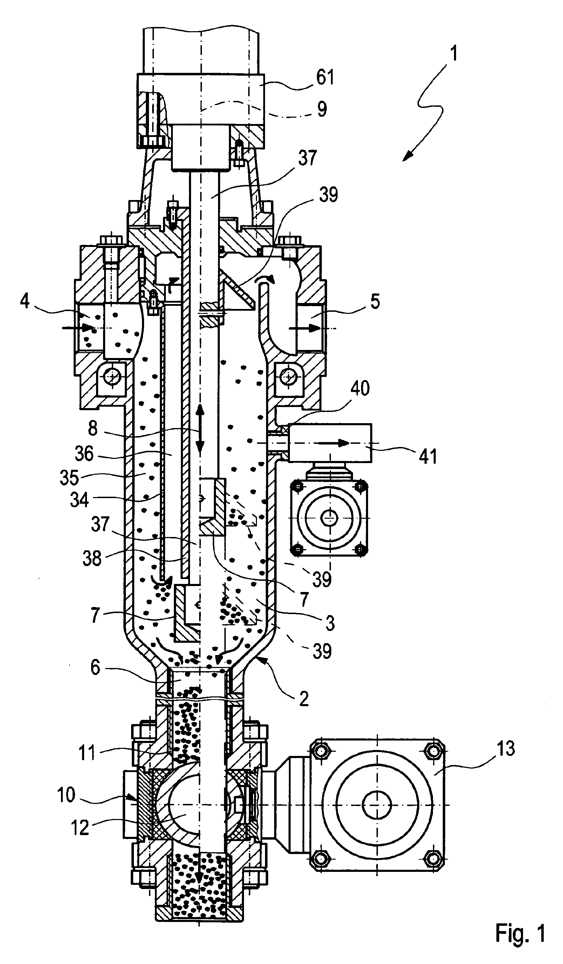

Von den gezeigten Ausführungsformen sollen nur die Ausführungsformen der Fig. 1 (links), 2, 4, 5, 8 (rechts), 11 und 12 vom Patentschutz erfasst sein, während die Ausführungsformen der Fig. 1 (rechts), 3, 6, 7, 8 (links), 9, 10 und 13 vom Patentschutz nicht erfasst sein sollen.

Entsprechend Fig. 1 umfasst eine Separationseinrichtung 1, mit deren Hilfe Feststoffe aus einer Flüssigkeit entfernt werden können, ein Gehäuse 2, das einen Innenraum 3 umschließt. Das Gehäuse 2 weist einen mit dem Innenraum 3 kommunizierenden Zulauf 4 und einen mit dem Innenraum 3 kommunizierenden Ablauf 5 auf. Die Separationseinrichtung 1 ist mit einem Sammelraum 6 ausgestattet, der zum Innenraum 3 hin offen ist. Der Sammelraum 6 dient zum Sammeln separierter Feststoffe. Außerdem ist die Separationseinrichtung 1 mit einem Kolben 7 ausgestattet, der im Innenraum 3 hubverstellbar angeordnet ist. Die Hubverstellbarkeit ist in Fig. 1 durch einen Doppelpfeil 8 angedeutet. Die Hubrichtung erstreckt sich dabei parallel zu einer Längsmittelachse 9 des Gehäuses 2. Die Längsmittelachse 9 dient in den Figuren gleichzeitig als Symmetrieebene, um links und rechts davon unterschiedliche Varianten der Separationseinrichtung 1 sowie unterschiedliche Zustände bzw. Kolbenhübe darzustellen.

Der Kolben 7 kann bei einer besonderen Ausführungsform in den als Kompressionsraum 6 ausgestalteten Sammelraum 6 einfahren und dadurch die darin gesammelten Feststoffe komprimieren, wobei er Flüssigkeit aus dem Kompressionsraum 6 bzw. aus den darin gesammelten Feststoffen zum Innenraum 3 hin verdrängt. Durch die Kompression lassen sich die im Kompressionsraum 6 gesammelten Feststoffe verdichten. Die Drücke, mit denen der Kolben 7 diese Verdichtung durchführt, sind zweckmäßig so gewählt, dass sich im Kompressionsraum 6 allmählich ein vergleichsweise kompakter Feststoffkörper ausbildet, der einen zusammenhängenden Block oder ein in sich festes Brikett bildet. Durch Entfernen dieses hochverdichteten Feststoffblocks aus dem Gehäuse 2 kann eine vergleichsweise große Masse an Feststoffen aus dem Innenraum 3 entfernt werden, wobei gleichzeitig ein extrem niedriger Flüssigkeitsverlust realisierbar ist.

Die Separationseinrichtung 1 weist eine Auslass-Sperreinrichtung 10 auf, die an einer vom Innenraum 3 abgewandten Auslassseite 11 des Kompressionsraums 6 angeordnet ist. Die Auslass-Sperreinrichtung 10 kann zum Komprimieren der Feststoffe die Auslassseite 11 verschließen und kann sie zum Austragen der komprimierten Feststoffe öffnen. Die Auslass-Sperreinrichtung 10 umfasst hier rein exemplarisch ein Kugelhahnventil 12, das mit Hilfe eines entsprechenden Stellantriebs 13 betätigbar ist. Alternativ kann anstelle eines Kugelhahnventils 12 auch ein Stoffschieber verwendet werden, der mit Hilfe eines entsprechenden Stellantriebs quer zur Hubrichtung 8 des Kolbens 7 verstellbar ist. Alternativ ist auch eine Ausführungsform möglich, bei welcher die Auslass-Sperreinrichtung 10 einen Sperrkolben aufweist, der parallel zur Hubrichtung 8 des Kolbens 7 mit Hilfe einer entsprechenden Stelleinrichtung, insbesondere hydraulisch oder pneumatisch, verstellbar ist, um die Auslassseite 11 zu verschließen bzw. zu öffnen.

Bei verschlossener Auslassseite 11 kann der Kolben 7 zyklisch in den Kompressionsraum 6 einfahren, um die sich darin ansammelnden Feststoffe zu verdichten. Hierbei wächst der Feststoffblock im Kompressionsraum 6 allmählich an. Eine entsprechende Hubanpassung des Kolbens 7 kann beispielsweise durch eine Drucksteuerung realisiert werden. Nach Ablauf einer vorbestimmten Zeitspanne und/oder bei Erreichen einer vorbestimmten Blockgröße wird ein Austrag des Feststoffblocks veranlasst. Hierzu wird die Auslassseite 11 geöffnet. Gleichzeitig kann der Kolben 7 den Feststoffblock durch Einfahren in den Kompressionsraum 6 durch die Auslassseite 11 austreiben. Hierzu führt der Kolben 7 einen entsprechenden, verlängerten Hub durch, beispielsweise um den Feststoffblock durch das Kugelhahnventil 12 hindurch zu führen, damit dieses nach dem Zurückziehen des Kolbens 7 ohne Kollision mit dem Feststoffblock wieder verschlossen werden kann. Da der Feststoffblock beim Verdichten gegen die den Kompressionsraum 6 seitlich begrenzende Wand gepresst wird, erzeugt der Feststoffblock eine hinreichende Dichtungswirkung, was einen Austrag des Feststoffblocks aus dem Kompressionsraum 6 ohne allzu großen Flüssigkeitsverlust ermöglicht.

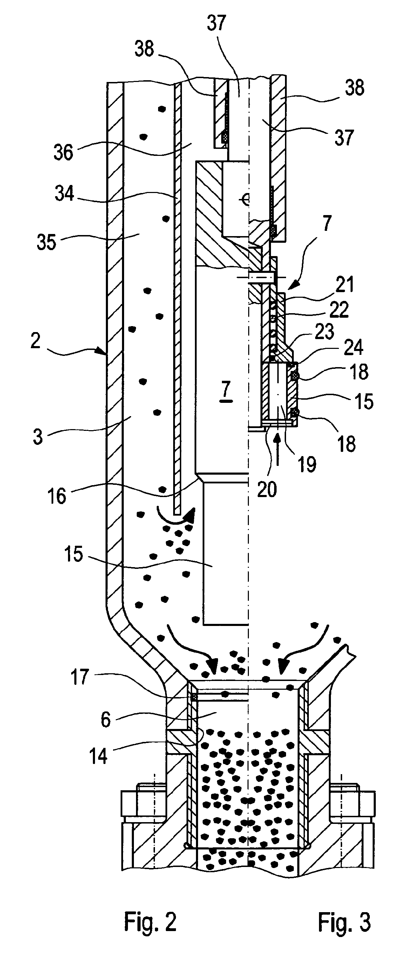

Damit der Kolben 7 beim Einfahren in den Kompressionsraum 6 die darin sich ansammelnden Feststoffe komprimieren und dabei Flüssigkeit aus dem Kompressionsraum 6 in den Innenraum 3 verdrängen kann, ist ein entsprechender Verdrängungspfad vorgesehen. Dieser Verdrängungspfad wird bei den Ausführungsformen der Fig. 1 und 2 durch einen Ringspalt gebildet, der sich beim Einfahren des Kolbens 7 radial zwischen dem Kolben 7 und einer den Kompressionsraum 6 seitlich einfassenden Kompressionsraumwand 14 ausbildet. Somit kann die verdrängte Flüssigkeit seitlich zwischen Kolben 7 und Kompressionsraumwand 14 durch den Ringspalt abströmen. Im Unterschied dazu zeigen die Fig. 3 bis 5 Ausführungsformen, bei denen der Verdrängungspfad zumindest teilweise innerhalb des Kolbens 7 verläuft, was weiter unten noch näher erläutert wird.

Gemäß Fig. 2 kann der Kolben 7 gestuft ausgeführt sein und einen vorausgehenden Abschnitt 15 aufweisen, der einen gegenüber dem übrigen Kolben 7 reduzierten Querschnitt aufweist. Der reduzierte Querschnitt des vorausgehenden Abschnitts 15 dient zur Realisierung des zuvor genannten Ringspalts zwischen dem Kolben 7 bzw. dem Abschnitt 15 und der Kompressionsraumwand 14 beim Eintauchen des Kolbens 7 bzw. des Abschnitts 15 in den Kompressionsraum 6. Eine den Übergang zwischen den Querschnitten des Kolbens 7 bildende Stufe 16 ist dabei so positioniert, dass der Kolben 7 mit seinem größeren Querschnitt dann in den Kompressionsraum 6 eindringt, wenn bei geöffneter Auslassseite 11 der Feststoffblock aus dem Kompressionsraum 6 ausgetrieben ist und durch einen zusätzlichen Kolbenhub noch aus der jeweiligen Auslass-Sperreinrichtung 10 ausgetrieben werden muss. Die Stufe 16 eliminiert dabei den Ringspalt zwischen Kolben 7 und Kompressionsraumwand 4. Optional kann zusätzlich an der Zylinderraumwand 14 eine Ringdichtung 17 vorgesehen sein, die mit dem Kolben 7 im Bereich seines größeren Querschnitts zusammenwirkt. Eine derartige Dichtung 17 kann grundsätzlich auch am Kolben 7 ausgebildet sein.

Bei den Ausführungsformen der Fig. 3 bis 5 weist der Kolben 7 an seinem vorausgehenden Abschnitt 15 einen Querschnitt auf, der in Verbindung mit Dichtungen 18, die hier am Kolben 7 ausgebildet sind, ein dichtes Einfahren des Kolbens 7 in den Kompressionsraum 6 ermöglichen. Der vorausgehende Abschnitt 15 des Kolbens 7 weist zumindest eine axiale Durchgangsöffnung 19 auf, die axial zum Kompressionsraum 6 hin offen ist. Am Einlass dieser Durchgangsöffnung 19 kann ein Filterelement 20 angeordnet sein, beispielsweise in Form eines Drahtgewebes, das so gewählt ist, dass es die auszutragenden Feststoffe nicht hindurchlässt, im übrigen jedoch zumindest für die Flüssigkeit durchlässig ist. Die jeweilige Durchgangsöffnung 19 ist an ihrer vom Kompressionsraum 6 abgewandten Seite durch eine Hülse 21 verschlossen, die am Kolben 7 hubverstellbar gelagert ist und die mit Hilfe einer Vorspannfeder 22 zum Verschließen der jeweiligen Durchgangsöffnung 19 angetrieben ist. Entsprechende Dichtungen 23 bzw. 24 ermöglichen eine radiale bzw. axiale Abdichtung der jeweiligen Durchgangsöffnung 19 gegenüber dem Innenraum 3 in der Schließstellung der Hülse 21. Beim Einfahren des Kolbens 7 in den Kompressionsraum 6 steigt der Druck in der Flüssigkeit im Kompressionsraum 6 stark an, wodurch die Hülse 21 abhebt und die Flüssigkeit durch die jeweilige Durchgangsöffnung 19 vom Kompressionsraum 6 in den Innenraum 6 gelangt.

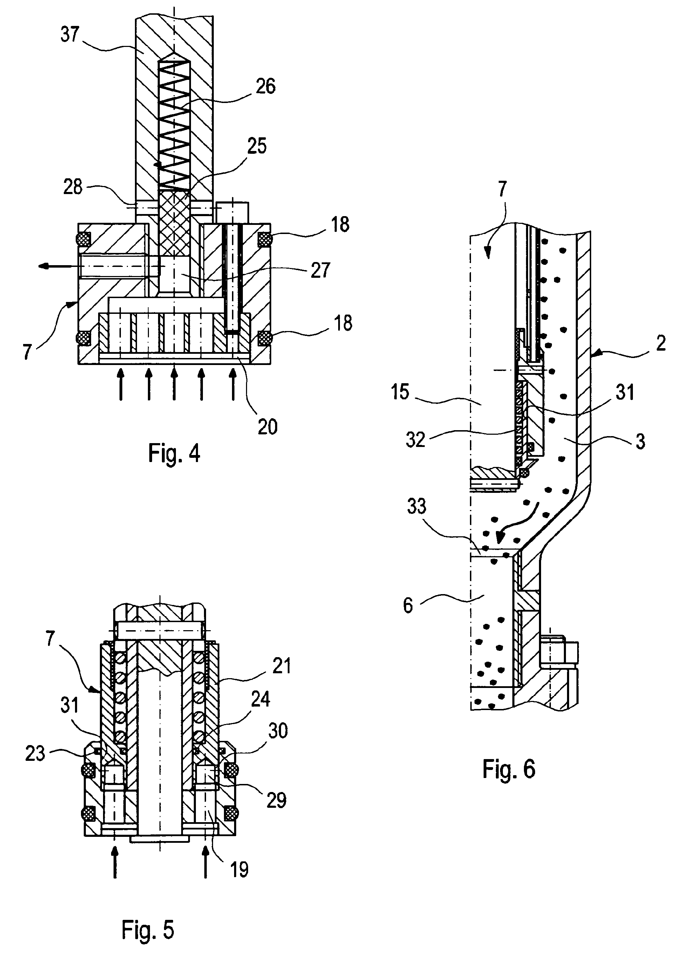

Fig. 4 zeigt eine andere Variante des Kolbens 7, bei der anstelle der Hülse 21 ein innenliegendes, hubverstellbares Steuerelement 25 verwendet wird, das mit Hilfe einer Rückstellfeder 26 in seine Schließstellung vorgespannt ist. Das Steuerelement 25 kann in Abhängigkeit seines Hubs eine zentrale Bohrung 27, in der es hubverstellbar angeordnet ist, mehr oder weniger mit wenigstens einer Querbohrung 28 verbinden, die zum Innenraum 3 hin offen ist. Beim Einfahren des Kolbens 7 in den Kompressionsraum 6 dichten die Dichtungen 18 gegenüber der Kompressionsraumwand 14, wodurch der Druck im Kompressionsraum 6 ansteigt. Die Flüssigkeit kann durch das Filterelement 20 in die Bohrung 27 gelangen und verdrängt das Steuerelement 25 bis die Ouerbohrung 28 geöffnet ist. So kann die Flüssigkeit durch den im Kolben 7 verlaufenden Verdrängungspfad vom Kompressionsraum 6 zum Innenraum 3 gelangen.

Die in Fig. 5 gezeigte Ausführungsform arbeitet wieder mit einer Hülse 21, die hier jedoch mit den Durchgangsöffnungen 19 kommunizierende Axialbohrungen 29 aufweist, die über jeweils eine Querbohrung 30 radial geöffnet sind. Der vorausgehende Kolbenabschnitt 15 ist gestuft und enthält einen Zylinderraum 31, in den die Hülse 21 axial einfahren kann. Im eingefahrenen Zustand sind die Querbohrungen 30 innerhalb des Zylinderraums 31 und somit verschlossen, wobei zusätzlich wieder Dichtungen 23, 24 vorgesehen sein können. Beim Einfahren des Kolbens 7 in den Kompressionsraum 6 steigt wieder der Druck im Kompressionsraum 6, wodurch die Hülse 21 aus dem Zylinderraum 31 ausgetrieben wird. Sobald die Querbohrungen 30 die jeweilige Dichtung 23 überfahren bzw. aus dem Zylinderraum 31 herausbewegt sind, kann die Flüssigkeit aus dem Kompressionsraum 6 in den Innenraum 3 strömen.

Fig. 6 zeigt eine weitere Ausführungsform für den Kolben 7. Der Kolben 7 weist an seinem vorausgehenden Abschnitt 15 wie bei den Ausführungsformen der Fig. 1 und 2 einen gegenüber dem Querschnitt der Kompressionsraumwand 14 reduzierten Querschnitt auf, um beim Einfahren in den Kompressionsraum 6 den besagten Ringspalt auszubilden. Zusätzlich ist bei dieser Ausführungsform am vorausgehenden Abschnitt 15 eine Hülse 31 hubverstellbar gelagert und mit Hilfe einer Antriebsfeder 32 so vorgespannt, dass sie einem in Richtung des Kompressionsraum 6 orientierten Hub des Kolbens 7 folgen kann. Besagte Hülse 21 ist an ihrem dem Kompressionsraum 6 zugewandten Ende nach Art eines Tellerventils ausgestaltet. Gleichzeitig ist eine dem Innenraum 3 zugewandte Einlassseite 33 des Kompressionsraums 6 nach Art eines Ventilsitzes ausgestaltet. Beim Einfahren des Kolbens 7 in den Kompressionsraum 6 kommt die Hülse 31 dichtend an der Einlassseite 33 zur Anlage, in dem der Tellerventilabschnitt der Hülse 31 in den Ventilsitz der Einlassseite 33 einfährt. Der Kolben 7 selbst fährt weiter in den Kompressionsraum 6 ein, erhöht dabei den Druck im Kompressionsraum 6, wodurch die Flüssigkeit durch den zwischen dem Kolben 7 und der Kompressionsraumwand 14 ausgebildeten Ringspalt verdrängt wird. Der Druck in der Flüssigkeit hebt die Hülse 31 gegen die Vorspannkraft der Antriebsfeder 32 an und ermöglicht ein Abfließen der Flüssigkeit in den Innenraum 3.

Der Kolben 4 besitzt zweckmäßig zumindest im Bereich seines vorausgehenden Abschnitts 15 einen zylindrischen, insbesondere einen kreiszylindrischen, Querschnitt. Auch der Kompressionsraum 6 weist bevorzugt einen zylindrischen bzw. kreiszylindrischen Querschnitt auf. Ebenso ist das Gehäuse 2 zweckmäßig so gestaltet, dass sein Innenraum 3 einen zylindrischen, vorzugsweise einen kreiszylindrischen Querschnitt besitzt. Bei einer vorteilhaften Ausführungsform kann der Zulauf 4 am Gehäuse 2 so angeordnet sein, dass die mit den Feststoffen beladene Flüssigkeit tangential in den Innenraum 3 eintritt. Der Zulauf 4 ist dabei so orientiert, dass die Flüssigkeit in einer senkrecht zur Längsmittelachse 9 liegenden Ebene in den Innenraum 3 einströmt. Hierdurch wird im Innenraum 3 eine Drallströmung generiert. Dadurch können Fliehkräfte an den Feststoffpartikeln angreifen und eine Sedimentation der Feststoffe unterstützen. Optional kann außerdem ein Tauchrohr 34 vorgesehen, das zweckmäßig einen zylindrischen, insbesondere einen kreiszylindrischen Querschnitt aufweist. Das Tauchrohr 34 ist koaxial zum Innenraum 3 angeordnet. Radial zwischen dem Tauchrohr 34 und dem Gehäuse 2 ist ein Ringraum 35 im Innenraum 3 ausgebildet. Der Ringraum 35 ist zum Kompressionsraum 6 hin offen. Auch ist das Tauchrohr 34 im Innenraum 3 so angeordnet, dass es zum Kompressionsraum 6 hin offen ist. Der Ablauf 5 kommuniziert mit einem Innenraum 36 des Tauchrohrs 34 und somit durch das Tauchrohr 34 mit dem Innenraum 3 des Gehäuses 2. Die tangentiale Zuströmung in Verbindung mit dem Tauchrohr 34 unterstützt die Abscheidung der Feststoffe aus der Flüssigkeit. Insbesondere können die Feststoffe im Ringraum 35 gezielt in Richtung des Kompressionsraums 36 sedimentieren, insbesondere bei der hier gezeigten, bevorzugten stehenden Anordnung des Gehäuses 2, die sich durch eine im wesentlichen vertikal orientierte Längsmittelachse 9 charakterisiert.

Bei der in Fig. 1 bezüglich der Längsmittelachse 9 links gezeigten Ausführungsform ist eine den Kolben 7 tragenden Kolbenstange 37 in einem Zylinderrohr 38 geführt. Dieses Zylinderrohr 38 erstreckt sich hier bis zum unteren Ende des Tauchrohrs 34, so dass der Kolben 7 stets außerhalb des Tauchrohrs 34 verbleibt und nur relativ kleine Hübe durchführen muss.

Bei der in Fig. 1 bezüglich der Längsmittelachse 9 rechts dargestellten Ausführungsform ist kein Tauchrohr 34 vorgesehen, dafür ist die Kolbenstange 37 mit einem Teller 38 ausgestattet, der dazu dient, bei einem in Richtung des Kompressionsraums 36 orientierten Hub des Kolbens 7 Feststoffe in Richtung Kompressionsraum 6 anzutreiben. Der Teller 38 kann dabei grundsätzlich als Sieb ausgestaltet sein, um zwar für die Flüssigkeit, jedoch nicht für die auszuscheidenden Partikel durchlässig zu sein. Im Beispiel ist der Teller 38 nach Art eines Kegelmantels konusförmig ausgestaltet. Er ist symmetrisch zur Längsmittelachse 9 aufgebaut und verjüngt sich mit zunehmendem Abstand vom Kompressionsraum 6.

Bei der in Fig. 1 gezeigten Ausführungsform ist etwa auf halber Höhe des Innenraums 3 ein Überlauf 39 angedeutet, der mit Hilfe eines Überlauf-Sperrventils 40 steuerbar ist.

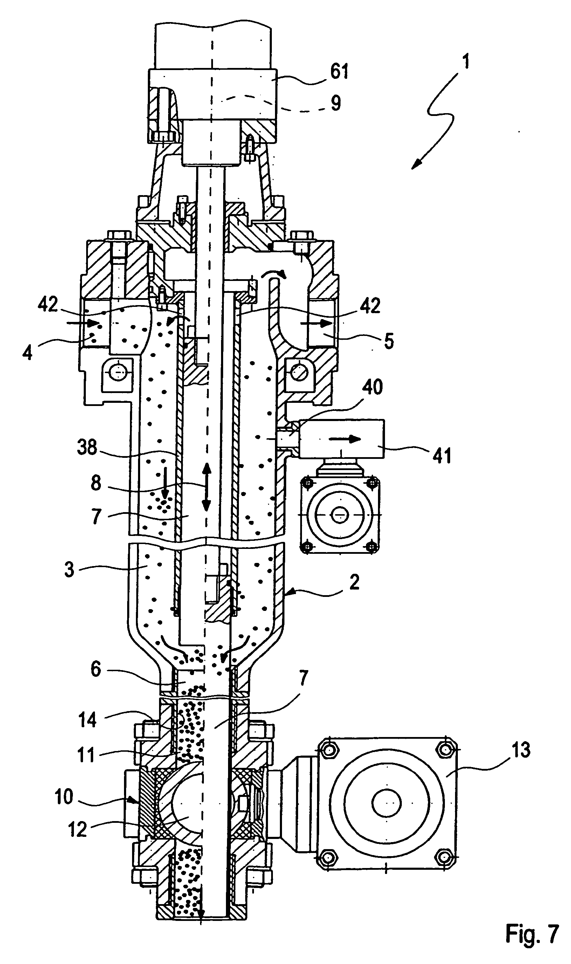

Fig. 7 zeigt eine weitere Ausführungsform, bei welcher der Kolben 7 in einem Zylinderrohr 38 hubverstellbar angeordnet ist. Dabei entspricht hier der Außenquerschnitt des Kolbens 7 dem Innenquerschnitt des Zylinderrohrs 38. Das Zylinderrohr 38 besitzt in einem vom Kompressionsraum 6 entfernten Endbereich Überströmöffnungen 42, durch die das Innere des Zylinderrohrs 38 mit dem Innenraum 3 kommuniziert. Diese Bauform hat den Vorteil, dass der Kolben 7 beim Rückhub, also bei einem vom Kompressionsraum 6 weggerichteten Hub Flüssigkeit aus dem Inneren des Zylinderrohrs 38 verdrängt. Diese kann durch die Überlauföffnungen 42 in den Innenraum einströmen und dadurch eine beschleunigte Strömung der mit Feststoffen beladenen Flüssigkeit in Richtung Kompressionsraum 6 bewirken. Diese Bauweise unterstützt somit die Ansammlung der Feststoffe im Kompressionsraum 6.

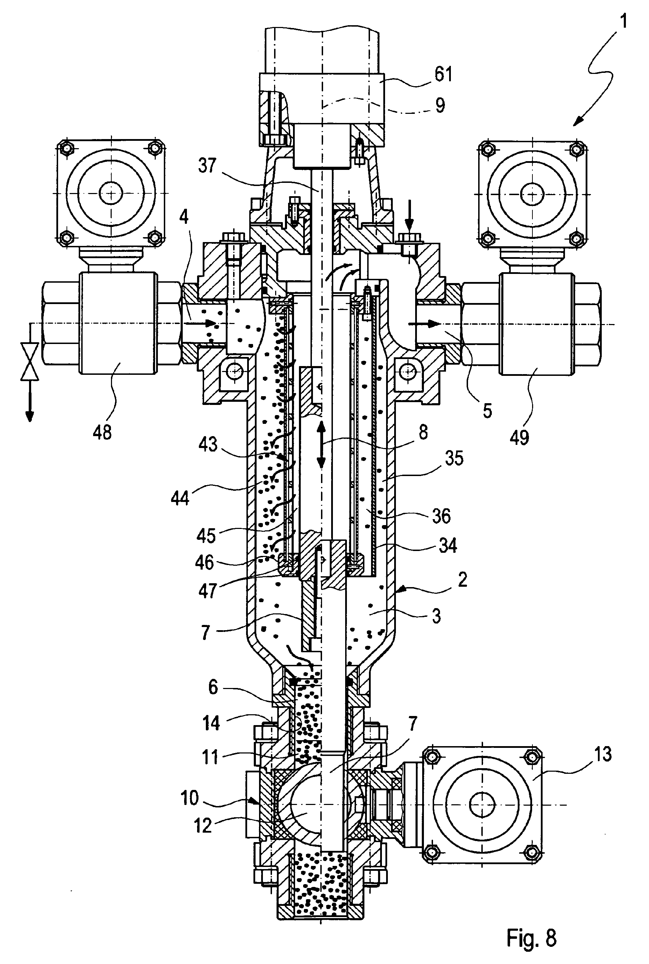

Bei den Ausführungsformen der Fig. 1 und 2 arbeitet die Separationseinrichtung 1 vorwiegend mittels Sedimentation. Bei den Ausführungsformen der Fig. 8 bis 10 ist die Separationseinrichtung 1 außerdem mit einem Filterkörper 43 ausgestattet, der im Gehäuse 2 angeordnet ist und der im Innenraum 3 einen mit dem Zulauf 4 kommunizierenden Rohraum 44 von einem mit dem Ablauf 5 kommunizierenden Reinraum 45 trennt. Der Kompressionsraum 6 ist dabei zum Rohraum 44 hin offen. Fig. 8 zeigt links eine Variante ohne Tauchrohr und rechts eine Variante mit Tauchrohr 34. Der mit Hilfe des Tauchrohrs 34 gebildete Ringraum 35 befindet sich ebenso wie der Innenraum 36 des Tauchrohrs 34 im Rohraum 44. Der Filterkörper 43 kann grundsätzlich eine an sich bekannte Konstruktion aufweisen. Beispielsweise kann der Filterkörper 43 ein geeignetes Filtermaterial, wie zum Beispiel ein Filterpapier oder ein Filtervlies, aufweisen. Der Filterkörper 43 kann auch als Kantenspaltfilter oder als Lochblechfilter oder dergleichen ausgestaltet sein.

Entsprechend Fig. 8 sind der Filterkörper 43 und der Kolben 7 zweckmäßig koaxial zueinander angeordnet, und zwar so, dass der Kolben 7 eine Endwand 46 des Filterkörpers 43 axial durchdringt. Die Endwand 46 verschließt den Filterkörper 13 axial an der dem Kompressionsraum 6 zugewandten Seite. Der Kolben 7 durchsetzt diese Endwand 46 hubverstellbar und abgedichtet. In Fig. 8 sind entsprechende Dichtungen 47 angedeutet. Der Kolben 7 ist wie bereits erläutert an einer Kolbenstange 37 angebracht, deren Querschnitt kleiner ist als der Querschnitt des Kolbens 7. Hierdurch wird erreicht, dass sich im Inneren des Filterkörpers 43, also reinseitig, das Volumen verändert, wenn der Kolben 7 seine Hubbewegungen durchführt. Beim Einfahren des Kolbens 7 mit seinem vorausgehenden Abschnitt 15 in den Kompressionsraum 6 wird das Volumen an der Rohseite 45 vergrößert, wodurch vermehrt Flüssigkeit durch den Filterkörper 43 in den Reinraum 45 gelangt. Beim Zurückfahren des Kolbens 7 wird das Volumen im Reinraum 45 reduziert, wodurch Flüssigkeit aus dem Reinraum 45 verdrängt wird. Durch Verschließen des Ablaufs 5 kann hierbei eine Rückströmung beziehungsweise eine Rückspülung des Filterkörpers 43 erreicht werden. Denn bei gesperrtem Ablauf 5 kann die Flüssigkeit von der Reinseite 4 nur durch den Filterkörper 43 in dessen Gegenstromrichtung aus dem Reinraum 45 austreten. Hierdurch kann eine Abreinigung des Filterkörpers 43 erreicht werden, bei welcher rohseitig am Filterkörper 43 angelagerte Feststoffe durch Rückspülung vom Filterkörper 43 entfernt werden. Gleichzeitig generiert der zurückfahrende Kolben 7 im Innenraum 3 rohseitig einen Druckabfall, der dazu führt, die rohseitige Flüssigkeit in Richtung Kompressionsraum 6 anzutreiben. Die vom Filterkörper 43 durch die Rückspülung gelösten Feststoffe können dadurch besonders einfach und rasch zum Kompressionsraum 6 gelangen. Die Erzeugung der zum Kompressionsraum 6 orientierten Strömung im Innenraum 3 kann durch Verschließen des Zulaufs 4 unterstützt werden. Zum Verschließen und Öffnen des Zulaufs 4 ist bei der in Fig. 8 gezeigten Ausführungsform eine Zulauf-Sperreinrichtung 48 vorgesehen. Ferner zeigt Fig. 8 eine Ablauf-Sperreinrichtung 49 zum Verschließen beziehungsweise zum Öffnen des Ablaufs 5.

Um die Rückspülung und Abreinigung des Filterkörpers 43 zusätzlich zu verbessern, kann vorgesehen sein, den Kolben 7 zur Durchführung eines schnellen Rücklaufs anzusteuern, wodurch eine Art Druckimpuls im Reinraum 45 erzeugt werden kann, mit dessen Hilfe die rohseitig am Filterkörper 43 angelagerten Feststoffe quasi abgesprengt werden können.

Bei der in Fig. 8 gezeigten Ausführungsform ist der Kolben 7 wie bei der in Fig. 2 gezeigten Ausführungsform ausgestaltet. Es ist klar, dass auch bei der in Fig. 8 gezeigten Ausführungsform ein Kolben 7 wie bei den Ausführungsformen der Fig. 1 und 3 bis 7 vorgesehen sein kann.

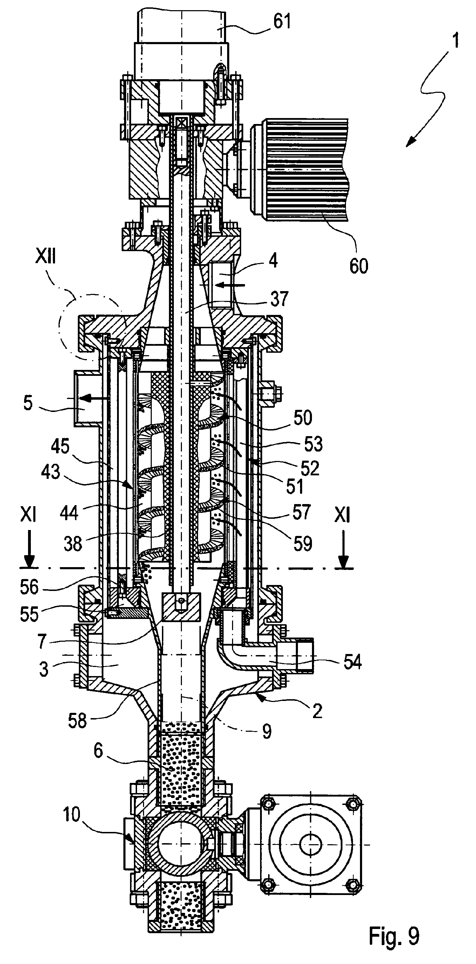

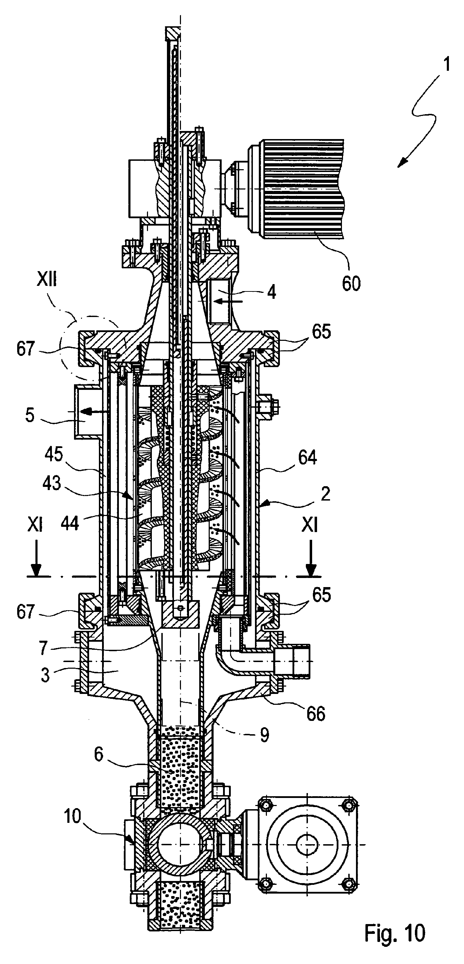

Entsprechend den Fig. 9 und 10 kann die Separationseinrichtung 1 außerdem eine Reinigungseinrichtung 50 aufweisen. Die Reinigungseinrichtung 50 ist dabei so ausgestaltet, dass sie das Filterelement 43 mit wenigstens einer Bürste 51 rohseitig abreinigt. Dabei kann die jeweilige Bürste 51 gegenüber der rohseitigen Oberfläche des Filterkörpers 43 Radialspiel aufweisen, um einen Filterkuchen mit einer vorbestimmten Dicke an der Rohseite des Filterkörpers 43 zu belassen, um so die Filterwirkung des Filterkörpers 43 zu verbessern. Alternativ kann die jeweilige Bürste 51 auch direkt die rohseitige Oberfläche des Filterkörpers 43 kontaktieren, um diese möglichst weitgehend abzubürsten beziehungsweise von den Feststoffen zu reinigen.

Des weiteren zeigen die Fig. 9 bis 11 eine Rückspüleinrichtung 52, mit deren Hilfe das Filterelement 43 segmentweise rückspülbar ist. Die Rückspüleinrichtung 52 besitzt eine Rückspüldüse 53, die sich über die axiale Länge des Filterkörpers 43 erstreckt. Durch eine relative Drehbewegung zwischen Filterkörper 43 und Rückspüldüse 53 kann der Filterkörper 43 entlang seines gesamten Umfangs segmentweise rückgespült werden. Im Beispiel ist der Filterkörper 43 relativ zum Gehäuse 2 ortsfest angeordnet, während die Rückspüldüse 53 um die Längsmittelachse 9 drehbar angeordnet ist. Hierzu weist der Filterkörper 43 einen kreisförmigen Querschnitt auf.

Die Rückspüleinrichtung 52 umfasst eine Zuführungsleitung 54 für ein geeignetes Rückspülmittel. Die Rückführleitung 54 mündet in einem Ringkanal 55, der mit der Rückspüldüse 53 kommuniziert. Der Ringkanal 55 ist in einem Ringkörper 56 ausgebildet, der mit der Rückspüldüse 53 rotiert. Als Rückspülmittel eignet sich beispielsweise gereinigte Flüssigkeit oder Pressluft.

Bei den Ausführungsformen der Fig. 9 und 10 ist die Separationseinrichtung 1 außerdem mit einer Fördereinrichtung 57 ausgestattet, mit deren Hilfe die Feststoffe zum Kompressionsraum 6 hin gefördert werden können. Sofern eine derartige Fördereinrichtung 57 vorhanden ist, ist grundsätzlich auch eine liegende Anordnung für das Gehäuse 2 der Separationseinrichtung 1 denkbar, bei welcher sich die Längsmittelachse 9 im wesentlichen waagerecht erstreckt. Die Ausführungsformen der Fig. 8 unterscheiden sich von derjenigen der Fig. 9 und 10 auch dadurch, dass bei der Ausführung gemäß Fig. 8 der Filterkörper 3 im Filtrierbetrieb von radial außen nach radial innen durchströmt wird, während er bei den Ausführungsformen der Fig. 9 und 10 im Filtrierbetrieb von radial innen nach radial außen durchströmt wird. Damit die separierten Feststoffe in den Kompressionsraum 6 gelangen können, ist der Endboden 46 des Filterkörpers 43 mit Hilfe eines Verbindungsrohrs 58 zum Kompressionsraum 6 hin verlängert. Das Verbindungsrohr 58 kann im Bereich seines vom Kompressionsraum 6 entfernten Abschnitts trichterförmig ausgestaltet sein, so dass es vom vergleichsweise großen Querschnitt des Rohraums 44, also des Innenraums des Filterkörpers 43, zum relativ kleinen Querschnitt des Kompressionsraums 6 übergeht.

Die Fördereinrichtung 57 ist hier als Schneckenförderer ausgestaltet, der mit einer Förderschnecke 59 arbeitet. Die Förderschnecke 59 ist dabei relativ zum Gehäuse 2 und somit relativ zum Filterkörper 43 drehend antreibbar, der relativ zum Gehäuse 2 ortsfest ist. Bei entsprechender Rotationsrichtung treibt die Förderschnecke 59 die Feststoffe im Rohraum 44 in Richtung Kompressionsraum 6 an. Zweckmäßig ist die Förderschnecke 59 als schraubenförmige Bürste 51 ausgestaltet, wodurch die Fördereinrichtung 57 und die Reinigungseinrichtung 50 ineinander integriert sind.

Besonders vorteilhaft ist die hier gezeigte Ausführungsform, bei welcher die Förderschnecke 59 beziehungsweise die schraubenförmige Bürste 51 koaxial zum Kolben 7 angeordnet ist. Hierdurch kann eine besonders kompakte Bauform realisiert werden. Als Drehantrieb für die Förderschnecke 57 kann grundsätzlich der gleiche Drehantrieb verwendet werden, der auch zum Antreiben der Rückspüldüse 53 verwendet wird. Insbesondere bilden die Förderschnecke 59 und die Rückspüldüse 53 eine gemeinsam antreibbare Einheit. Im Beispiel wird das Zylinderrohr 38, in dem die Kolbenstange 37 des Kolbens 7 hubverstellbar angeordnet ist, mit Hilfe eines Drehantriebs 60 drehend angetrieben. Mit diesem Zylinderrohr 38 sind die Förderschnecke 59 und der Rückspülkanal 53 drehfest verbunden.

Gemäß Fig. 9 kann zum Antreiben des Kolbens 7 beziehungsweise der Kolbenstange 37 ein entsprechender Stellantrieb 61 vorgesehen sein, der den gewünschten Hub beispielsweise hydraulisch oder pneumatisch realisiert. Im Unterschied dazu zeigt Fig. 10 eine Ausführungsform, bei welcher ein gemeinsamer Antrieb 60 vorgesehen ist, um die Förderschnecke 59, den Rückspülkanal 53 und den Kolben 7 anzutreiben. Hierzu kann für den Antrieb des Kolbens 7 eine Art Spindeltrieb vorgesehen sein, der die Rotationsbewegung einer entsprechenden Antriebsspindel in eine Longitudinalbewegung umwandelt.

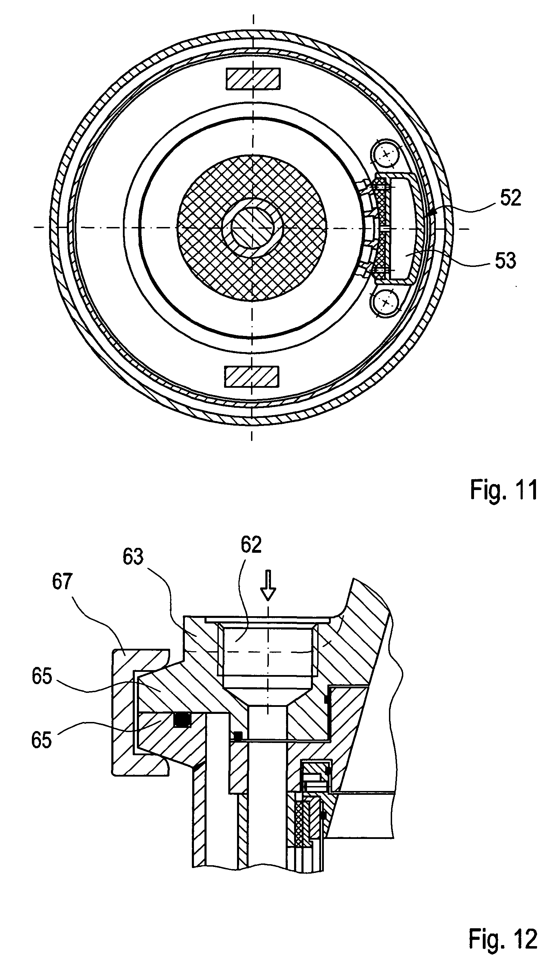

Entsprechend Fig. 12 kann ein Fremddruckanschluss 62 zweckmäßig in einen Deckel 63 des Gehäuses 2 integriert sein. Die Fig. 9 und 10 zeigen eine Ausführungsform, bei welcher das Gehäuse 2 mehrteilig aufgebaut ist, wobei ein mittlerer Mantelabschnitt 64 über entsprechende Zentrierflansche 65 einerseits mit dem genannten Deckel 63 und andererseits mit einem Boden 66 verbunden ist. Die Verbindung erfolgt dabei im Bereich der Zentrierflansche 65 mit Hilfe entsprechender Klammern 67.

Die Ausführungsformen der Fig. 9 und 10 zeigen den gleichen Kolben 7 wie die Ausführungsform der Fig. 1. Es ist klar, dass die Ausführungsformen der Fig. 9 und 10 auch die Kolben 7 entsprechend den Fig. 2 bis 6 aufweisen können.

Um den Feststoffblock mit einem möglichst geringen Flüssigkeitsverlust austreiben zu können, kann der Kolben 7 an seinem vorausgehenden Abschnitt 15 bei einer hier nicht gezeigten Ausführungsform eine Ringdichtung aufweisen, deren Querschnitt mit Hilfe eines Stellglieds einstellbar ist. Zum Komprimieren der Feststoffe ist der Außenquerschnitt des Dichtrings verkleinert, wodurch der Ringraum zwischen Kolben 7 und Kompressionsraumwand 14 offen ist und Flüssigkeit durch den Verdrängungspfad abströmen kann. Zum Austreiben des Feststoffblocks kann die Dichtung mit einem größeren Außenquerschnitt arbeiten, der dann dichtend an der Kompressionsraumwand 14 anliegt. Beim Austreiben des Feststoffkörpers kann dann keine Flüssigkeit vom Innenraum 3 durch den Kompressionsraum aus der geöffneten Austrittsseite 11 austreten. Eine hinsichtlich ihres Außenquerschnitts variierende Ringdichtung kann beispielsweise mit Hilfe einer axialen Kompression und/oder einer radialen Verdrängung der Ringdichtung realisiert werden, was mit Hilfe eines entsprechenden Stellglieds realisierbar ist.

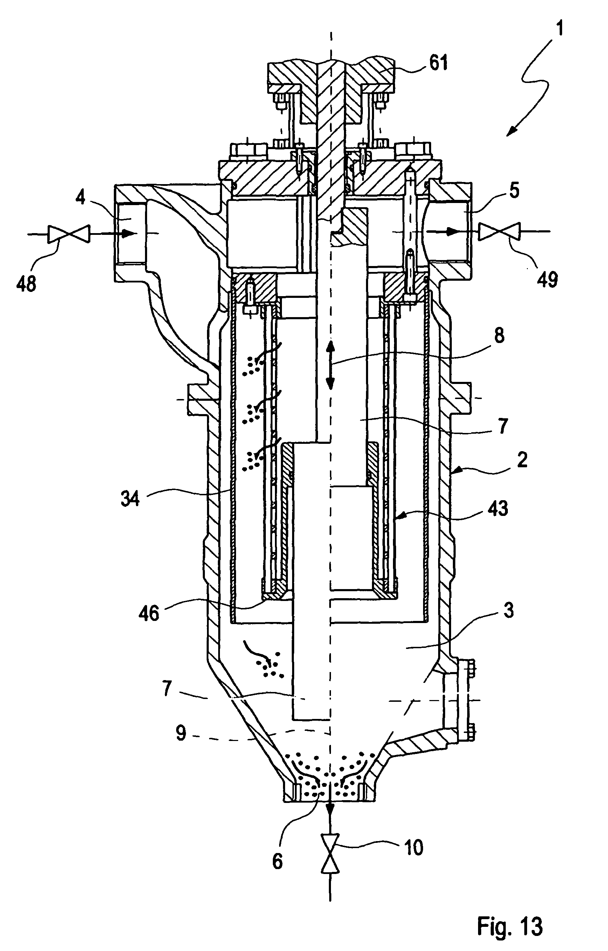

Fig. 13 zeigt eine Ausführungsform, bei welcher der Kolben 7 nicht zum Komprimieren der Feststoffe im Kompressionsraum 6 bzw. im Sammelraum 6 dient. In Fig. 13 ist links von der Symmetrieebene 9 der maximal ausgefahrene Kolben 7 dargestellt, während in Fig. 13 rechts von der Symmetrieebene 9 der maximal eingefahrene Kolben 7 dargestellt ist. Erkennbar besitzt der Kolben 7 in seiner maximal in Richtung zum Sammelraum 6 hin ausgefahrenen Stellung einen Axialabstand zwischen dem Sammelraum 6 und dem freien Kolbenende. Das bedeutet, dass der Kolben 7 bei dieser Ausführungsform nicht bis in den Sammelraum 6 einfährt, sondern davor, noch im Innenraum 3 endet. Bei einem vom Sammelraum 6 weggerichteten Hub des Kolbens 7, also wenn der Kolben 7 zurückgezogen oder eingefahren wird, wird im Innenraum 3 Flüssigkeit verdrängt. Diese durch die Kolbenbewegung erzeugte Strömung im Innenraum 3 ist durch die koaxiale Ausrichtung des Kolbens 7 zum Sammelraum 6 in Richtung zum Sammelraum 6 hin orientiert. Der Eintrag von Feststoffen in den Sammelraum 6 kann dadurch unterstützt werden.

Bei der hier gezeigten Ausführungsform ist im Gehäuse 2 außerdem der Filterkörper 43 angeordnet, der von außen nach innen durchströmt wird, um die Feststoffe aus der Flüssigkeit auszuscheiden. Somit lagern sich die Feststoffe zunächst radial außen am Filterkörper 43 an. Der Kolben 7 ist koaxial zum Filterkörper 43 angeordnet bzw. gelagert. In der Folge bewirkt eine Hubverstellung des Kolbens 7 eine Volumenänderung im Inneren des Filterkörpers 43. Beim Zurückfahren des Kolbens 7, also bei einer vom Sammelraum 6 weggerichteten Hubbewegung verdrängt der Kolben 7 Flüssigkeit aus dem Inneren des Filterkörpers 43, also von der Reinseite zur Rohseite. Hierdurch kommt es zu einer Rückspülung des Filterkörpers 43, wodurch die sich außen anlagernden Feststoffe ablösen. Die sich von der Außenseite des Filterkörpers 43 ablösenden Feststoffe werden dabei von der zum Sammelraum 6 orientierten Strömung erfasst und in Richtung Sammelraum 6 beschleunigt. Besonders vorteilhaft ist es hierbei, wenn der Kolben 7 zumindest beim Zurückfahren eine vergleichsweise hohe Geschwindigkeit aufweist. Hierdurch kann der Druck im Inneren des Filterkörpers 43 vergleichsweise rasch erhöht werden, wodurch die daran angelagerten Feststoffe impulsartig abgesprengt werden können, und zwar im wesentlichen entlang der gesamten Oberfläche des Filterkörpers 43. Gleichzeitig werden dadurch erhöhte Strömungsgeschwindigkeiten im Innenraum 3 generiert. Im Unterschied dazu kann das Ausfahren des Kolbens 7, also die in Richtung zum Sammelraum 6 orientierte Bewegung vergleichsweise langsam durchgeführt werden. Vorteilhaft ist es, beim Zurückfahren des Kolbens 7 die Zulauf-Sperreinrichtung 48 und die Ablauf-Sperreinrichtung 49 zu schließen, wodurch die Strömungsbildung im Innenraum 3 und ggf. die Rückspülung des Filterkörpers 43 signifikant verbessert werden können.

Es ist klar, dass die Arbeitsweise der in Fig. 13 gezeigten Separationseinrichtung 1 auch bei den Ausführungsformen mit Kompression der Feststoffe durchführbar ist.

## Patentansprüche

1. Separationseinrichtung zum Entfernen von Feststoffen aus einer Flüssigkeit,
- mit einem Gehäuse (2), das einen Zulauf (4) und einen Ablauf (5) sowie einen mit dem Zulauf (4) und mit dem Ablauf (5) kommunizierenden Innenraum (3) aufweist,
- mit einem zum Innenraum (3) hin offenen Sammelraum (6) zum Sammeln separierter Feststoffe,
- mit einem im Innenraum (3) koaxial zum Sammelraum (6) hubverstellbaren Kolben (7), der so ausgestaltet ist, dass er zum Komprimieren der gesammelten Feststoffe in den als Kompressionsraum (6) ausgestalteten Sammelraum einfährt und dabei Flüssigkeit zum Innenraum (3) hin verdrängt,
- wobei der Innenraum (3) zylindrisch ist,
**dadurch gekennzeichnet,**
- **dass** der Zulauf (4) so am Gehäuse (2) angeordnet ist, dass die Flüssigkeit tangential in den Innenraum (3) eintritt,
- **dass** im Gehäuse (2) ein zum Sammelraum (6) hin offenes zylindrisches Tauchrohr (34) koaxial zum Innenraum (3) angeordnet ist, derart, dass sich radial zwischen dem Gehäuse (2) und dem Tauchrohr (34) ein zum Sammelraum (6) hin offener Ringraum (35) ausbildet.

2. Separationseinrichtung nach Anspruch 1,
**dadurch gekennzeichnet,**
**dass** der Kolben (7) so ausgestaltet ist, dass er bei einem vom Sammelraum (6) weggerichteten Hub im Innenraum (3) eine in Richtung zum Sammelraum (6) orientierte Strömung erzeugt.

3. Separationseinrichtung nach Anspruch 1 oder 2,
**dadurch gekennzeichnet,**
**dass** an einer vom Innenraum (3) abgewandten Auslassseite (11) des Kompressionsraums (6) eine Auslass-Sperreinrichtung (10) angeordnet ist, die zum Komprimieren der Feststoffe die Auslassseite (11) verschließt und die zum Austragen der komprimierten Feststoffe die Auslassseite (11) öffnet.

4. Separationseinrichtung nach Anspruch 3,
**dadurch gekennzeichnet,**
**dass** der Kolben (7) so ausgestaltet ist, dass er zum Austreiben der komprimierten Feststoffe durch die geöffnete Auslassseite (11) ansteuerbar ist.

5. Separationseinrichtung nach einem der Ansprüche 1 bis4,
**dadurch gekennzeichnet,**
**dass** der Kolben (7) beim Einfahren in den Kompressionsraum (6) die Flüssigkeit daraus über einen Verdrängungspfad in den Innenraum (3) verdrängt, wobei der Verdrängungspfad radial zwischen dem Kolben (7) und einer den Kompressionsraum (6) seitlich einfassenden Kompressionsraumwand (14) oder zumindest teilweise innerhalb des Kolbens (7) verläuft.

6. Separationseinrichtung nach einem der Ansprüche 1 bis5,
**dadurch gekennzeichnet,**
**dass** im Gehäuse (2) ein Filterkörper (43) angeordnet ist, der im Innenraum (3) einen mit dem Zulauf (4) kommunizierenden Rohraum (44) von einem mit dem Ablauf (5) kommunizierenden Reinraum (45) trennt, wobei der Sammelraum (6) zum Rohraum (44) hin offen ist.

7. Separationseinrichtung nach Anspruch6,
**dadurch gekennzeichnet,**
**dass** der Filterkörper (43) koaxial zum Kolben (7) angeordnet ist, wobei der Kolben (7) eine den Filterkörper (43) axial verschließende Endwand (46) hubverstellbar und abgedichtet axial durchdringt.

8. Separationseinrichtung nach Anspruch 6 oder 7,
**dadurch gekennzeichnet,**
**dass** eine Rückspüleinrichtung (52) vorgesehen ist, mit der das Filterelement (43) insbesondere segmentweise rückspülbar ist.

9. Separationseinrichtung nach einem der Ansprüche 1 bis 8,
**dadurch gekennzeichnet,**
- **dass** eine Zulauf-Sperreinrichtung (48) zum Verschließen und Öffnen des Zulaufs (4) vorgesehen ist, und/oder
- **dass** eine Ablauf-Sperreinrichtung (49) zum Verschließen und Öffnen des Ablaufs (5) vorgesehen ist.

10. Separationseinrichtung nach einem der Ansprüche 1 bis 9,
**dadurch gekennzeichnet,**
**dass** der Kolben (7) mit einer Kolbenstange (37) antriebsverbunden ist, deren Querschnitt kleiner ist als der Querschnitt des Kolbens (7).

11. Separationseinrichtung nach einem der Ansprüche 1 bis 10,
**dadurch gekennzeichnet,**
**dass** das Gehäuse (2) im Betrieb stehend angeordnet ist, derart, dass die Feststoffe durch Sedimentation in den Sammelraum (6) gelangen.

## Claims

1. A separation device for removing solids from a liquid,
- with a housing (2) that comprises an inlet (4) and an outlet (5) as well as an inner chamber (3) which communicates with the inlet (4) and the outlet (5),
- with a collecting chamber (6) that is open toward the inner chamber (3) for collecting separated solids,
- with a piston (7) which is arranged in the inner chamber (3) to be stroke-adjustable coaxially to the collecting chamber (6) and is configured in such a manner that for compressing the collected solids, said piston retracts into the collecting chamber which is configured as a compression chamber (6) and thereby displaces liquid toward the inner chamber (3),
- wherein the inner chamber (3) is cylindrical,
**characterized in**
- **that** the inlet (4) is arranged on the housing (2) in such a manner that the liquid enters tangentially into the inner chamber (3),
- **that** in the housing (2), a cylindrical immersion pipe (34) which is open toward the collecting chamber (6) is arranged coaxially to the inner chamber (3) in such a manner that radially between the housing (2) and the immersion pipe (34), an annular chamber (35) is formed which is open toward the collecting chamber (6).

2. The separation device according to claim 1, **characterized in that** the piston (7) is configured such that during a stroke directed away from the collecting chamber (6), said piston generates in the inner chamber (3) a flow which is oriented toward the collecting chamber (6).

3. The separation device according to claim 1 or claim 2, **characterized in that** on an outlet side (11) of the compression chamber (6), which outlet side faces away from the inner chamber (3), an outlet blocking device (10) is arranged which, for compressing the solids, closes the outlet side (11) and for discharging the compressed solids, opens the outlet side (11).

4. The separation device according to claim 3, **characterized in that** the piston (7) is configured such that it can be actuated for expelling the compressed solids through the outlet side (11).

5. The separation device according to any one of the claims 1 to 4, **characterized in that** when retracting into the compression chamber (6), the piston (7) displaces the liquid therefrom via a displacement path into the inner chamber (3), wherein said displacement path runs radially between the piston (7) and a compression chamber wall (14) laterally enclosing the compression chamber (6), or runs at least partially within the piston (7).

6. The separation device according to any one of the claims 1 to 5, **characterized in that** in the housing (2), a filter body (43) is arranged which, in the inner chamber (3), separates a crude chamber (44) communicating with the inlet (4) from a pure chamber (45) communicating with the outlet (5), wherein the collecting chamber (6) is open toward the crude chamber (44).

7. The separation device according to claim 6, **characterized in that** the filter body (43) is arranged coaxially to the piston (7), wherein the piston (7) penetrates axially in a stroke-adjustable and sealed manner through an end wall (46) which axially closes the filter body (43).

8. The separation device according to claim 6 or claim 7, **characterized in that** a backflushing device (52) is provided by means of which the filter element (43) can be backflushed in particular in segments.

9. The separation device according to any one of the claims 1 to 8,
**characterized in**
- **that** an inlet blocking device (48) for closing and opening the inlet (4) is provided, and/or
- **that** an outlet blocking device (49) for closing and opening the outlet (5) is provided.

10. The separation device according to any one of the claims 1 to 9, **characterized in that** the piston (7) is drivingly connected to a piston rod (37), the cross-section of which is smaller than the cross-section of the piston (7).

11. The separation device according to any one of the claims 1 to 10, **characterized in that** during the operation, the housing (2) is arranged vertically in such a manner that the solids reach the collecting chamber (6) through sedimentation.

## Revendications

1. Dispositif de séparation pour éliminer les matières solides d'un liquide,
- comportant un logement (2), qui présente une conduite d'admission (4) et une conduite d'échappement (5) ainsi qu'un espace interne (3) communiquant avec la conduite d'admission (4) et avec la conduite d'échappement (5),
- comportant un espace d'accumulation (6) ouvert dans la direction de l'espace interne (3) pour accumuler les matières solides séparées,
- comportant un piston à course réglable (7) dans l'espace interne (3) coaxialement à l'espace de accumulation (6), qui est conçu de telle sorte qu'il se déploie pour comprimer les matières solides accumulées dans l'espace d'accumulation (6) conçu comme un espace de compression et refoule ainsi le liquide vers l'espace interne (3),
- dans lequel l'espace interne (3) est cylindrique,
**caractérisé en ce que**
- la conduite d'admission (4) est disposée sur le logement (2) de telle sorte que le liquide rentre tangentiellement dans l'espace interne (3),
- dans le logement (2) un tube plongeur (34) cylindrique ouvert dans la direction de l'espace d'accumulation (6) est disposé coaxialement à l'espace interne (3), de telle sorte qu'un espace annulaire (35) ouvert vers l'espace d'accumulation (6) radialement entre le logement (2) et le tube plongeur (34) soit réalisé.

2. Dispositif de séparation selon la revendication 1, **caractérisé en ce que** le piston (7) est conçu de telle sorte qu'il génère un écoulement orienté dans la direction de l'espace d'accumulation (6) lors d'une course se détournant de l'espace d'accumulation (6) dans l'espace interne (3).

3. Dispositif de séparation selon les revendications 1 ou 2, **caractérisé en ce que** un dispositif de blocage d'échappement (10) est disposé sur le côté d'échappement (11) qui se détourne de l'espace intérieur (3) de l'espace de compression (6), lequel obture le côté d'échappement (11) pour comprimer les matières solides et ouvre le côté d'échappement (11) pour extraire les matières solides comprimées.

4. Dispositif de séparation selon la revendication 3, **caractérisé en ce que** le piston (7) est conçu de telle sorte qu'il puisse être commandé afin d'extraire les matières solides comprimées à travers le côté d'échappement (11) ouvert.

5. Dispositif de séparation selon une des revendications 1 à 4, **caractérisé en ce que** le piston (7) lors du déploiement dans l'espace de compression (6) refoule le liquide hors de celui-ci par l'intermédiaire d'un trajet de refoulement dans l'espace interne (3), dans lequel le trajet de refoulement s'étend radialement entre le piston (7) et une paroi d'espace de compression (14) bordant latéralement l'espace de compression (6) ou au moins partiellement à l'intérieur du piston (7).

6. Dispositif de séparation selon une des revendications 1 à 5, **caractérisé en ce que** un corps de filtre (43) est disposé dans le logement (2), lequel sépare dans l'espace interne (3) un espace brut (44) communiquant avec la conduite d'admission (4) d'un espace purifié (45) communiquant avec la conduite d'évacuation (5), dans lequel l'espace d'accumulation (6) est ouvert dans la direction de l'espace brut (44).

7. Dispositif de séparation selon la revendication 6, **caractérisé en ce que** le corps de filtre (43) est disposé coaxialement au piston (7), dans lequel le piston (7) traverse une paroi d'extrémité (46) obturant axialement le corps de filtre (43) dans une course réglable et de manière étanchéifiée axialement.

8. Dispositif de séparation selon les revendications 6 ou 7, **caractérisé en ce que** un dispositif de lavage à contre-courant (52) est prévu, avec lequel l'élément de filtre (43) peut être lavé à contre-courant notamment sur des segments.

9. Dispositif de séparation selon une des revendications 1 à 8,
**caractérisé en ce que**,
- un dispositif de blocage de conduite d'admission (48) est prévu afin de fermer et ouvrir la conduite d'admission (4), et/ou
- un dispositif de blocage de conduite d'échappement (49) est prévu afin de fermer et ouvrir la conduite d'échappement (5).

10. Dispositif de séparation selon une des revendications 1 à 9, **caractérisé en ce que** le piston (7) est relié en entraînement avec une tige de piston (37), dont la section transversale est plus petite que la section transversale du piston (7).

11. Dispositif de séparation selon une des revendications 1 à 10, **caractérisé en ce que** le logement (2) en fonctionnement est disposé à la verticale, de telle sorte que les matières solides parviennent par sédimentation dans l'espace d'accumulation (6).
